**Europäisches Patentamt**

**European Patent Office**

**Office européen des brevets**

(11) Veröffentlichungsnummer: **0 010 255**

**A1**

# EUROPÄISCHE PATENTANMELDUNG

(21) Anmeldenummer: **79103883.9**

(22) Anmeldetag: **10.10.79**

(51) Int. Cl.³: **B 65 G 33/24**

(30) Priorität: **25.10.78 DE 2846390**

(43) Veröffentlichungstag der Anmeldung:
**30.04.80 Patentblatt 80/9**

(84) Benannte Vertragsstaaten:
**BE CH FR GB NL SE**

(71) Anmelder: **Schnell, Karl**
**Mühlstrasse 28**
**D-7065 Winterbach(DE)**

(72) Erfinder: **Schnell, Karl**
**Mühlstrasse 28**
**D-7065 Winterbach(DE)**

(74) Vertreter: **Schmid, Berthold et al,**
**Patentanwälte Dipl.-Ing. B. Schmid Dr. Ing. G. Birn**
**Falbenhennenstrasse 17**
**D-7000 Stuttgart 1(DE)**

(54) **Fördervorrichtung für Fleisch, Knochen u. dgl.**

(57) Das Gehäuse (1) der Fördervorrichtung besteht aus einem die untere Hälfte der Förderschnecke (2) konzentrisch umgebenden, im Querschnitt kreisbogenförmigen Gehäuseteil (3), an welches sich einerseits eine tangential verlaufende, gerade Rinnenwandung (4) und andererseits eine dazu parallele Rinnenwandung (5) anschließt. Letztere ist mit dem im Querschnitt kreisbogenförmigen Gehäuseteil (3) unter Zwischenschaltung einer Brustfläche (13) verbunden. Außerdem kann zwischen die Brustfläche (13) und die untere Halbschale (3) noch eine im Querschnitt ebenfalls kreisbogenförmige, in Verlängerung vom Gehäuseteil (3) verlaufende Gehäusefläche (9) geschaltet werden. Auf diese Weise entsteht ein Abstreifkeil (14).

Die Brustfläche (13) bildet mit einer Umhüllenden der Förderschnecke (2) einen stumpfen Winkel (18), der in der erfindungsgemäßen Weise ein Einklemmen von Knochensplittern zwischen die Gänge der Förderschnecke (2) und die zugeordnete Rinnenwandung (5) verhindert. Sofern sich die Förderschnecke (2) lediglich in einer Richtung dreht, besitzt das Gehäuse (1) lediglich eine Brustfläche (13), und zwar an der Einlaufseite (12).

PATENTANWÄLTE

DIPL.-ING.                    DR.-ING                    DIPL.-PHYS
BERTHOLD SCHMID      GERHARD BIRN         HEINRICH QUARDER

FALBENHENNENSTRASSE 17 · 7000 STUTTGART 1 · FERNSPRECHER (0711) 60 88 93

- 1 -

UNSER ZEICHEN 13 197 B/sw

Karl    S c h n e l l

7065   Winterbach

### Fördervorrichtung für Fleisch, Knochen u. dgl.

Die Erfindung bezieht sich auf eine Fördervorrichtung für Fleisch, Knochen u. dgl., mit einer Förderschnecke und einem diese von unten her umfassenden, rinnenartigen Gehäuse, an dessen im Querschnitt kreisbogenförmigen Gehäuseteil sich beidseits eine Rinnenwandung anschließt. Fördervorrichtungen dieser Art sind an sich bereits bekannt, und sie werden in vielen Industriezweigen, namentlich in der fleischverarbeitenden Industrie, in den verschiedensten Größen und Ausführungen verwendet. Insbesondere

- 2 -

dienen sie zum Transport des zu verarbeitenden Gutes von einer Station zur nächsten.

Bei der Fleischverarbeitung läßt es sich nicht vermeiden, daß dem zu fördernden Fleisch gelegentlich auch Knochensplitter beigemengt sind. Letztere findet man natürlich auch, wenn die Fördervorrichtung Knochen transportieren soll. Bei der vorbekannten Fördervorrichtung umschließt der im Querschnitt kreisbogenförmige Gehäuseteil die Förderschnecke entlang einem Winkel von 180°. Die Rinnenwandungen verlaufen parallel zueinander, wobei ihr Seitenabstand dem Durchmesser des im Querschnitt kreisbogenförmigen Gehäuseteils entspricht. Dadurch verlaufen diese Rinnenwandungen in spitzem Winkel zu den Schneckengängen. Wenn nun ein Knochensplitter in diesen engen Spaltraum zwischen der einlaufseitigen Rinnenwandung und einem Schneckengang gelangt, so besteht die Gefahr, daß ihn die Förderschnecke in diesen sich verengenden Spaltraum hineinzieht, und das kann zum Blockieren der Förderschnecke führen. Abgesehen von der Unterbrechung des Fördervorgangs können Beschädigungen der Fördervorrichtung und/oder ihres Antriebs eintreten.

Die Aufgabe der Erfindung besteht infolgedessen darin, eine Fördervorrichtung der eingangs genannten Art zu schaffen, bei welcher ein derartiges Blockieren durch Knochensplitter u. dgl. vermieden oder zumindest unwahrscheinlicher wird.

Zur Lösung dieser Aufgabe wird eine Fördervorrichtung gemäß dem Oberbegriff des Anspruchs 1 vorgeschlagen, die erfindungsgemäß entsprechend dem kennzeichnenden Teil des ersten Anspruchs ausgebildet ist. Die absatzartige Brustfläche verläuft in radialer oder etwa radialer Richtung zu einem die Förderschnecke umhüllenden gedachten Zylinder. Sie schließt mit den Gängen der Förderschnecke bzw. einer gedachten Tangentialfläche zur Förderschnecke im Bereich des inneren Endes der Brustfläche einen im Vergleich zum bekannten Stand der Technik wesentlich größeren, insbesondere stumpfen Winkel ein. Infolgedessen ist die Gefahr des Einklemmens von Knochensplittern zwischen die Schneckengänge und die Brustfläche, die gleichermaßen das untere Ende der betreffenden Rinnenwandung darstellt, eliminiert oder zumindest erheblich vermindert. Ihre Breite, in radialer bzw. etwa radialer Richtung zur Förderschnecke

- 4 -

gesehen, ist so zu wählen, daß die größten üblicherweise
vorkommenden Knochensplitter bequem Platz finden. Aufgrund
der Erschütterungen, die beim Betrieb derartiger Vorrichtungen unvermeidlich sind, wird der Knochensplitter
in Förderrichtung oder aufgrund der Schwerkraft bei entsprechender Neigung der Fördervorrichtung entgegen der
Förderrichtung bewegt, und er fällt dann zwischen zwei
Schneckengängen in den im Querschnitt kreisbogenförmigen
Gehäuseteil, wo er dann zusammen mit dem Fleisch oder einem
evtl. anderen Transportgut mitgenommen wird.

Bei einer Fördervorrichtung mit einer lediglich in einer
Richtung drehenden Förderschnecke wird in Weiterbildung
der Erfindung vorgeschlagen, daß sich die Brustfläche an
der Einlaufseite des Gehäuses befindet. An der Auslaufseite der Förderschnecke ist ein Verklemmen der Knochensplitter nicht zu befürchten, weil sie dort von der Schnecke
stets hochgerissen werden und dann zwischen die Schneckengänge zurückfallen. Unter der "Einlaufseite" wird die
Längsseite des Gehäuses verstanden, an welcher die Schneckengänge, von oben kommend, eintauchen. Sie ist nicht zu
verwechseln mit dem Einlaß der Fördervorrichtung, an dem letzterer das Gut zugeführt wird.

Eine weitere Ausgestaltung der Erfindung sieht vor, daß
die Brustfläche gegen die Förderschnecke hin geneigt verläuft, so daß die dorthin gelangten Knochensplitter u.dgl.
aufgrund ihre  Eigengewichts zwischen zwei Schneckgängen
in den im Querschnitt kreisbogenförmigen Gehäuseteil
abrutschen können. Letzterer umschließt gemäß einer
anderen Variante der Erfindung die Förderschnecke an seiner
bzw. jeder der Brustfläche zugekehrten Seite über die
Horizontale hinaus. Hierbei bilden die Brustflächen und
der über die Horizontale hinausgeführte Teil des im Querschnitt kreisbogenförmigen  Gehäuseteils eine Art Abstreifkeil. Der Vorteil dieser Ausführung liegt darin, daß sich
die Gesamtbreite des Gehäuses quer zur Förderrichtung
gegenüber der herkömmlichen Bauart nicht verbreitert.
Infolgedessen ist es ohne weiteres möglich, bereits bestehende Fördervorrichtungen in der erfindungsgemäßen
Weise zu verbessern, wenn man den erwähnten Abstreifkeil
separat fertigt und an der entsprechenden Stelle montiert.
Das oberhalb der Horizontalen gelegene, im Querschnitt
kreisbogenförmige Teilstück des Gehäuses, erstreckt sich

- 7 -

vorzugsweise über einen Winkel von ca. 30$^{o}$ bis 60$^{o}$.

Zur weiteren Verbesserung der Erfindung wird vorgeschlagen,
daß eine gedachte Verlängerung der Brustfläche oberhalb
der geometrischen Achse der Förderschnecke gelegen ist.
Der Abstand soll allerdings nicht zu groß sein, damit
die Brustfläche noch ein genügend starkes Gefälle erhält.
Letztere und das im Querschnitt kreisbogenförmige, oberhalb der Horizontalen gelegene Teilstück des Gehäuses
schließen in Weiterbildung der Erfindung einen Winkel
von etwa 90$^{o}$ ein.

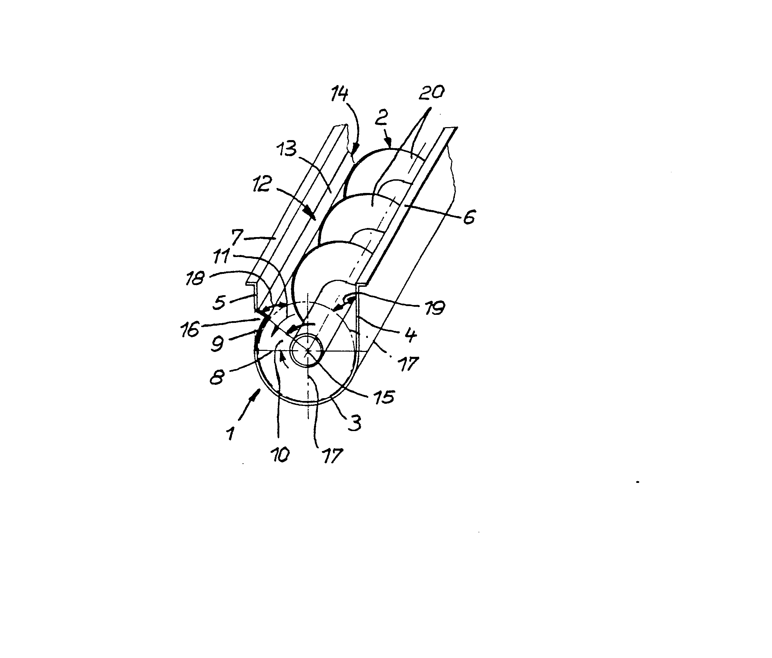

In der Zeichnung ist ein Ausführungsbeispiel der Erfindung
anhand einer abgebrochen dargestellten Fördervorrichtung
schematisch und perspektivisch gezeigt.

Die erfindungsgemäße Fördervorrichtung besitzt ein rinnenartiges Gehäuse 1, welches die Förderschnecke 2 von unten
her umfaßt. Es besteht aus einem im Querschnitt kreisbogenförmigen Gehäuseteil 3, an das sich beidseitig je eine
Rinnenwandung 4 bzw. 5 anschließt. Die freien Enden der
letzteren können beispielsweise im rechten Winkel nach außen umgebogen werden, so daß Stützflächen 6 bzw. 7 für eine nicht gezeigte Abdeckung entstehen. Die Rinnenwandung 4 geht tangential in den im Querschnitt kreisbogenförmigen Gehäuseteil 3 über. An der gegenüberliegenden Seite ist der im Querschnitt kreisbogenförmige Gehäuseteil über die Horizontale 8 hinaus weitergeführt, wobei das oberhalb der Horizontalen gelegene, im Querschnitt selbstverständlich auch kreisbogenförmige Teilstück des Gehäuses mit 9 bezeichnet ist. Es erstreckt sich über einen Winkel 10 von ca. 45$^o$ und befindet sich bei einer Drehrichtung der Förderschnecke 2 im Sinne des Pfeils 11 an der Einlaufseite 12 des Gehäuses 1.

An das sich oberhalb der Horizontalen 8 befindliche, im Querschnitt kreisbogenförmige Teilstück 9 des Gehäuses 1 schließt sich eine sog. Brustfläche 13 an. Diese beiden Gehäuseteile und die sich nach oben anschließende Gehäusewandung 5 bilden zusammen einen treppenartigen Teil des Gehäuses 1. Außerdem bilden die Gehäuseteile 9 und 13 zusammen einen Abstreifkeil 14. Vorzugsweise verläuft die Brustfläche 13 nicht genau in radialer Richtung, vielmehr geht eine gedachte, nach innen weisende Verlängerung der

- 8 -

Brustfläche oberhalb der geometrischen Achse 15 der
Förderschnecke 2 vorbei. Die Brustfläche und das Gehäuseteilstück 9 schließen einen Winkel 16 von vorzugsweise
etwa 90$^o$ miteinander ein. Wie man der Zeichnung entnehmen
kann, verläuft die Rinnenwandung 5 nicht nur parallel
zur Rinnenwandung 4, sondern in gleichem seitlichem
Abstand von einer gedachten Vertikalebene 17.

Vorzugsweise sind der im Querschnitt kreisbogenförmige
Gehäuseteil 3 und die beiden Rinnenwandungen 4 und 5 zusammen mit dem Gehäuseteil 9 und der Brustfläche 13 sowie
den Stützflächen 6 und 7 einstückig gefertigt. Dies
bezieht sich allerdings auf die Betrachtung in Umfangsrichtung, d.h. bei besonders langer Fördervorrichtung
können mehrere derartige Teile in Längsrichtung aneinandergesetzt werden und auf diese Weise das Gehäuse der Fördervorrichtung bilden. Es ist aber ohne weiteres auch vorstellbar, daß die Rinnenwandung 5 in analoger Weise zur
Rinnenwandung 4 direkt mit dem im Querschnitt kreisbogenförmigen Gehäuseteil 3 verbunden und der Abstreifkeil 14
separat gefertigt und daran an der geeigneten Stelle befestigt ist. Außerdem könnte man die Brustfläche 13 gegebenenfalls tiefer legen, beispielsweise unmittelbar mit dem
Gehäuseteil 3 verbinden und auf das Gehäuseteil 9 verzichten.
Dabei würde man allerdings ein breiteres Gehäuse 1 erhalten,
wenn man die Rinnenwandung 5 vertikal ausrichtet. Dies
ließe sich jedoch bei einer geneigt von unten nach oben
gerichteten Rinnenwandung 5 vermeiden. Die gezeichnete
Konstruktion stellt allerdings die bevorzugte Ausführungsform der Erfindung dar.

Die geneigt von oben außen nach unten innen verlaufende
Brustfläche 13 schließt mit dem gedachten Zylinder 17 um
die Förderschnecke 2 bzw. einer an ihrem inneren Ende
an diesen Zylinder gelegten Tangentialfläche einen stumpfen
Winkel 18 ein, während der entsprechende Winkel 19 an der
gegenüberliegenden Rinnenwandung 4 spitz ist. Bei der
vorbekannten Ausführung sind beidseits spitze Winkel entsprechend dem mit 19 bezeichneten vorhanden.

Aufgrund des stumpfen Winkels 18 können von den Schneckengängen 20 mitgenommene Knochensplitter od. dgl. bei einer
Drehrichtung der Förderschnecke 2 in Pfeilrichtung 11
nicht zwischen die Rinnenwandung und die Schneckengänge 20
eingeklemmt werden. Sie gelangen vielmehr auf die Brustfläche 13, an der entlang die Schneckengänge 20 wandern.
Aufgrund möglicher Erschütterungen und der Neigung der
Brustfläche 13 zum Gehäuseinnern hin fallen sie dann
schließlich zwischen zwei Schneckengängen nach unten und
werden anschließend von der Schnecke 2 zusammen mit dem
übrigen Fördergut zum Auslaß der Fördervorrichtung transportiert.

Üblicherweise befindet sich am einen Ende des Gehäuses 1
ein Einlaß, vorzugsweise in Form eines Einlaßtrichters,
und am anderen Ende der Auslaß. Je nach Ausbildung des
nicht gezeigten Ein- und Auslasses ist das Gehäuse 1
stirnseitig beispielsweise mit einer ebenen, in der Zeichnung allerdings nicht gezeigten Platte verschlossen.

## A n s p r ü c h e

1.    Fördervorrichtung für Fleisch, Knochen u. dgl.,
mit einer Förderschnecke und einem diese von unten her
umfassenden, rinnenartigen Gehäuse, an dessen im Querschnitt kreisbogenförmigen Gehäuseteil sich beidseits eine
Rinnenwandung anschließt, dadurch gekennzeichnet, daß
wenigstens eine der Rinnenwandungen (4, 5) über eine
absatzartige Brustfläche (13) mit dem im Querschnitt
kreisbogenförmigen Gehäuseteil (3) verbunden ist.

2.    Fördervorrichtung nach Anspruch 1, mit einer lediglich
in einer Richtung drehenden Förderschnecke, dadurch gekennzeichnet, daß sich die Brustfläche (13) an der Einlaufseite (12) des Gehäuses (1) befindet.

3.    Fördervorrichtung nach Anspruch 1 oder 2, dadurch
gekennzeichnet, daß die Brustfläche (13) gegen die Förderschnecke (2) hin geneigt verläuft.

4.    Fördervorrichtung nach einem oder mehreren der vorhergehenden Ansprüche, dadurch gekennzeichnet, daß der im
Querschnitt kreisbogenförmige Gehäuseteil (3) die Förderschnecke (2) an seiner bzw. jeder der Brustfläche (13)
zugekehrten Seite über die Horizontale (8) hinaus umschließt.

001025

5. Fördervorrichtung nach Anspruch 4, dadurch gekennzeichnet, daß sich das oberhalb der Horizontalen (8) gelegene, im Querschnitt kreisbogenförmige Teilstück (9) des Gehäuses (1) über einen Winkel von ca. 30° bis 60° erstreckt.

6. Fördervorrichtung nach einem oder mehreren der vorhergehenden Ansprüche, dadurch gekennzeichnet, daß eine gedachte Verlängerung der Brustfläche (13) oberhalb der geometrischen Achse (15) der Förderschnecke (2) gelegen ist.

7. Fördervorrichtung nach Anspruch 5 und 6, dadurch gekennzeichnet, daß die Brustfläche (13) und das im Querschnitt kreisbogenförmige, oberhalb der Horizontalen (8) gelegene Teilstück (9) des Gehäuses (1) einen Winkel von etwa 90° einschließen.

Europäisches Patentamt

**EUROPÄISCHER RECHERCHENBERICHT**

0010255

Nummer der Anmeldung

EI 79 10 3883

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 337 026 (SILVER)<br>* Das ganze Dokument * | 1-3,5 |
| | US - A - 2 499 929 (NELSON)<br>* Spalte 3, Zeilen 3-13; Figuren 7,8 * | 1,2,4,5 |
| X | DE - C - 932 417 (BUCKAU R. WOLF AKT.)<br>* Seite 2, Zeilen 16-72; Figur 2 * | 1,3-5 |
| | DE - C - 371 394 (KRUPP)<br>* Das ganze Dokument * | 1,2 |

**KLASSIFIKATION DER ANMELDUNG (Int.Cl. 3)**

B 65 G 33/24

**RECHERCHIERTE SACHGEBIETE (Int. Cl. 3)**

B 65 G
A 22 C

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-01-1980 | V. ROLLEGHEM |

EPA form 1503.1 06.78